# FASCICULE DE BREVET EUROPEEN

(11) **EP 3 586 944 B1**
(45) Date de publication et mention de la délivrance du brevet: **16.12.2020**
(21) Numéro de dépôt: 19182662.7
(22) Date de dépôt: 26.06.2019
(51) Int. Cl.: B01D 53/64, B01D 53/83

(54) **PROCÉDÉ DE DÉMERCURISATION D'EFFLUENTS GAZEUX**
VERFAHREN ZUR BESEITIGUNG VON QUECKSILBER AUS ABGASEN
METHOD FOR REMOVING MERCURY FROM GASEOUS EFFLUENTS

(30) Priorité: 27.06.2018 FR 1855752
(43) Date de publication de la demande: 01.01.2020
(73) Titulaire: LAB SA, 69007 Lyon (FR)
(72) Inventeur: SIRET, Bernard, 69200 VENISSIEUX (FR); TABARIES, Frank, 83430 SAINT MANDRIER SUR MER (FR)
(74) Mandataire: Lavoix

(56) Documents cités:
- EP-A1- 0 919 274
- EP-A2- 1 275 430
- US-A1- 2010 258 006

## Description

La présente invention concerne un procédé de démercurisation d'effluents gazeux.

Beaucoup d'industries génèrent des effluents gazeux contenant du mercure, qui est un composé hautement toxique et qu'il faut retirer de ces effluents gazeux. En particulier, du mercure se retrouve dans les effluents gazeux des usines de production d'énergie qui brûlent du charbon, le charbon contenant naturellement un peu de mercure qui, lors de la combustion, va se retrouver dans les fumées de combustion sous forme de mercure métal ou de mercure oxydé. On retrouve également du mercure dans les fumées de combustion issues des usines de valorisation énergétique des déchets et les usines d'incinération de déchets, parce que les déchets contiennent un peu de mercure.

Plusieurs procédés sont utilisés pour démercuriser les effluents gazeux, notamment les fumées précitées, c'est-à-dire pour épurer ces effluents gazeux en retenant le mercure.

La manière la plus commune de procéder est de mettre en contact les effluents gazeux avec des adsorbants pulvérulents ou en grains. Le plus utilisé de ces adsorbants est le charbon actif car il est peu onéreux et efficace pour d'autres polluants, comme les composés organiques volatils, les dioxines et les furanes. Ce charbon actif peut être dopé avec des composés comme des halogènes, tels que le chlore, le brome ou l'iode, du soufre ou du sélénium. Toutefois, à haute température et tout particulièrement quand la température dépasse 200°C, les isothermes d'adsorption deviennent très défavorables : il faut alors utiliser des quantités importantes de charbon, ce qui impacte défavorablement le coût d'exploitation, ainsi que la qualité des résidus solides générés. De plus, une augmentation des dosages de charbon actif peut ne pas suffire et des pics, au-delà des limites permises, se produisent. Par rapport à l'utilisation de charbon actif simple, l'emploi de charbons dopés améliore un peu cette situation, mais le coût de ces produits est important et des problèmes secondaires, par exemple dus à la corrosivité des charbons halogénés, surviennent. De même, l'utilisation de charbons bromés peut également, par association à du chlorure d'ammonium présent dans les effluents gazeux, générer des mélanges corrosifs pour les échangeurs opérant à des températures relatives basses, tels que des économiseurs.

Il a été proposé d'utiliser des argiles, ou bien des mélanges d'argiles et de chaux. Mais, en règle générale, à dosage équivalent et à température équivalente, ces produits argileux sont moins capacitifs et moins efficaces que les charbons actifs.

Il a aussi été proposé de faire percoler les effluents gazeux dans des tours remplies de charbon actif en granulés. Toutefois, cette technique est peu attractive en termes d'encombrement volumique et présente des risques potentiels de sécurité au vu des tonnages statiques importants de charbon utilisés, les fumées à démercuriser étant en général chaudes. Des phénomènes d'auto-ignition du charbon à la température de fonctionnement, c'est-à-dire entre 140 et 200°C, peuvent se produire et entrainer d'importantes conséquences.

Des procédés humides sont par ailleurs utilisés, dans lesquels on exploite la solubilité des sels de mercure, ou bien dans lesquels on réalise une oxydation du mercure métal en mercure ionique avant ou lors de son transfert en phase liquide. Ces procédés humides sont efficaces, mais pas toujours utilisables : c'est par exemple le cas lorsque les effluents gazeux à traiter sont situés dans une zone ne disposant pas d'eau ou au niveau de laquelle un rejet humide important est problématique. De plus, il y a toujours une possibilité pour que, en présence de réducteurs comme les composés du soufre à l'état d'oxydation +4 (SO₂, sulfites, hydrogénosulfites,...), le mercure déjà piégé rétrograde à l'état de mercure métal (+0) qui va alors être désorbé et repasser dans les effluents gazeux.

Il est donc nécessaire de trouver un adsorbant qui soit à la fois réactif, capacitif et stable à des températures jusqu'à 220°C, tout en étant économique.

Dans une certaine mesure, les charbons actifs dopés au soufre remplissent cet objectif, mais la surface totale extérieure offerte au transfert, pour la capture du mercure, n'est que celle du réactif tel qu'il a été introduit dans les effluents gazeux, c'est-à-dire sous forme de poudre.

Il a récemment été proposé, dans les demandes de brevet français FR1760086 et FR1760087, de démultiplier cette surface offerte au transfert, en pulvérisant, dans une gaine où circulent des effluents gazeux chauds à démercuriser, un réactif soufré, qui va alors se déposer à la surface de toutes les particules présentes. Cette solution est attractive, mais n'est pas toujours utilisable, par exemple pour des installations existantes dans lesquelles le point précis d'injection de ce réactif est inaccessible ou difficilement accessible.

Par le passé, il avait été aussi proposé, dans EP 0 709 128, d'injecter une solution de tétrasulfure de sodium dans les effluents gazeux chauds. Toutefois, une telle solution de tétrasulfure de sodium est assez visqueuse, ce qui empêche de la pulvériser finement et donc n'est pas favorable à une grande dispersion du réactif. De plus, quand les effluents gazeux sont très chauds, le point de fusion du tétrasulfure de sodium peut se trouver dépassé.

EP 0 919 274 a proposé d'envoyer les effluents gazeux à démercuriser à un séparateur gaz-solides duquel une partie des résidus solides collectés est renvoyée, via un conduit de recyclage, dans les effluents gazeux à traiter en amont du séparateur. Via le conduit de recyclage, est également envoyé dans les effluents gazeux à traiter un mélange de zéolite et de polysulfure de sodium. EP 0 919 274 précise que le temps de séjour pour ce mélange (avant d'atteindre le séparateur) est inférieur à 10 secondes, en étant notamment de 8 secondes en moyenne.

Le but de la présente invention est de proposer un nouveau procédé de démercurisation, qui soit efficace, économique et simple à mettre en œuvre.

A cet effet, l'invention a pour objet un procédé de démercurisation d'effluents gazeux, tel que défini à la revendication 1.

L'idée à la base de l'invention est de disperser intégralement un réactif soufré de captation du mercure, à la surface d'une grande partie, voire de la totalité de grains solides qui sont ensuite envoyés dans les effluents gazeux à démercuriser. Cette idée s'oppose ainsi à EP 0 919 274 mentionné plus haut et, plus généralement, aux solutions, qui proposent de pulvériser un réactif de captation du mercure directement dans la gaine où circulent les effluents gazeux, et dans lesquelles la surface offerte au transfert pour le mercure peut s'avérer réduite, en étant limitée à la surface développée par les particules solides résultantes de la pulvérisation et de l'évaporation subséquente. Selon l'invention, le réactif soufré est introduit dans un réacteur au sein duquel le réactif soufré est brassé avec des solides qui transitent par ce réacteur avant de rejoindre les effluents gazeux à traiter : au sein du réacteur, le réactif soufré est mis en contact avec les solides et recouvre les grains des solides sous l'effet mécanique du brassage et des interactions grains-grains, si bien que, à la sortie du réacteur, la surface apparente et l'activité pour le réactif soufré se retrouvent accrues, ce qui augmente la surface offerte au transfert du mercure une fois que le flux sortant du réacteur est mélangé aux effluents gazeux à traiter. De plus, les solides envoyés au réacteur sont constitués d'une fraction importante de résidus solides collectés depuis les effluents gazeux : il y a ainsi une recirculation du réactif soufré via le réacteur qui constitue ainsi un réacteur de réactivation, ce qui démultiplie la surface offerte au transfert du mercure. La démercurisation des effluents gazeux est ainsi très performante, tout en étant simple et économique à mettre en oeuvre et en induisant de nombreux avantages pratiques, comme détaillé par la suite.

Des caractéristiques additionnelles avantageuses du procédé conforme à l'invention sont spécifiées aux revendications dépendantes.

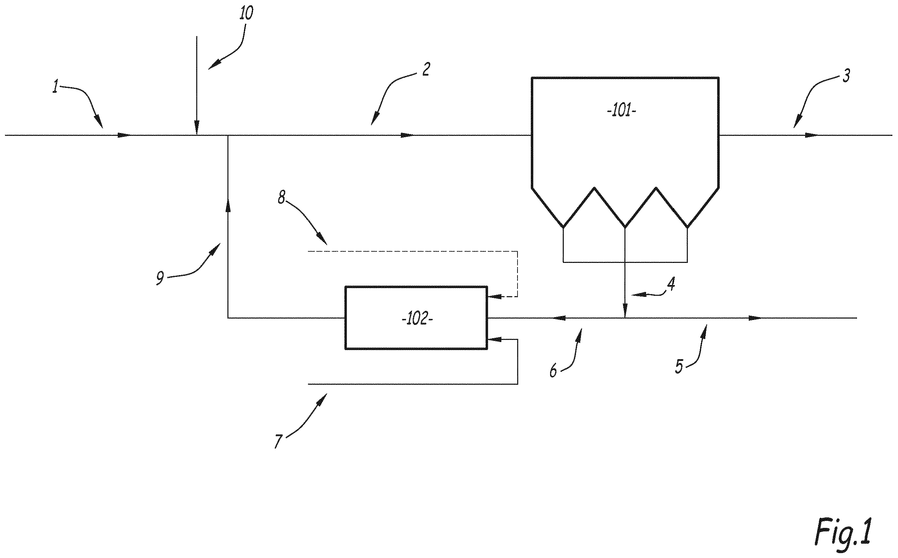

L'invention sera mieux comprise à la lecture de la description qui va suivre, donnée uniquement à titre d'exemple et faite en se référant aux dessins sur lesquels la figure 1 est un schéma d'une installation mettant en œuvre un procédé conforme à l'invention.

Sur la figure 1 est représentée une installation permettant de traiter des effluents gazeux, ou fumées, 1. Les fumées 1 contiennent du mercure et sont, par exemple et de manière non limitative, constituées par des fumées de combustion résultant de la combustion de charbon, de déchets industriels, de déchets ménagers ou autres. La concentration de mercure dans les fumées 1 est par exemple comprise entre 50 et 500 µg/Nm³, mais peut être supérieure. Les fumées 1 peuvent contenir en outre d'autres polluants, notamment des polluants acides, en particulier l'acide chlorhydrique HCI et le dioxyde de soufre SO₂, des poussières et des cendres volantes, pour ne mentionner que quelques possibilités.

Les fumées à traiter 1 sont envoyées à un séparateur gaz-solides 101. Ce séparateur gaz-solides 101 est d'une technologie connue en soi et est par exemple un filtre à manches ou un électrofiltre. En amont du séparateur gaz-solides 101, les fumées 1 sont mélangées avec deux flux distincts, à savoir un flux recyclé 9, détaillé ci-après, et un flux frais 10 constitué d'un réactif de captation de polluants acides. En pratique, l'introduction du flux 9 dans les fumées 1 peut aussi bien être en amont qu'en aval de l'introduction du flux 10 dans les fumées 1. Dans tous les cas, les fumées 1, dans lesquelles les flux 9 et 10 sont introduits, présentent une température comprise entre 120 et 280°C et le mélange des fumées 1 avec les flux 9 et 10 forme un flux 2 qui est introduit dans le séparateur gaz-solides 101.

Le réactif du flux 10, nécessaire pour la captation des polluants acides contenus dans les fumées 1, que sont principalement l'acide chlorhydrique et le dioxyde de soufre, est par exemple un réactif alcalin, notamment de la chaux vive, de la chaux éteinte, du bicarbonate de sodium ou du sesquicarbonate de sodium, sans que cette liste ne soit limitative.

Des fumées épurées 3, qui sortent du séparateur gaz-solides 101, sont évacuées ou bien sont envoyées à un traitement complémentaire, tel qu'une dénitrification par voie catalytique, dite SCR (anagramme de l'expression anglaise « Selective Catalytic Réduction »).

Des résidus solides 4 sont collectés par le séparateur gaz-solides 101, ces résidus solides 4 contenant en particulier, à la fois, les poussières et cendres présentes dans les fumées 1, les produits solides résultant de la réaction entre les flux 9 et 10 et les polluants présents dans les fumées 1, ainsi que les particules solides, provenant des flux 9 et 10, qui n'ont pas réagi avec les polluants contenus dans les fumées 1.

Une partie minoritaire 5 des résidus solides 4 collectés par le séparateur gaz-solides 101 est évacuée. Dans le même temps, une partie majoritaire 6 de ces résidus solides 4, qui constitue entre 70 et 95% en masse des résidus solides 4, est envoyée à un réacteur de réactivation 102.

En plus des solides du flux 6, un réactif soufré 7 est introduit dans le réacteur de réactivation 102. A l'intérieur du réacteur de réactivation 102, ce dernier brasse ensemble les solides du flux 6 et le réactif soufré 7 de manière que ce dernier se disperse dans les solides amenés par le flux 6, en particulier en couvrant une grande partie, voire la totalité des grains de ces solides.

En pratique, la forme de réalisation du réacteur de réactivation 102 n'est pas limitative, du moment qu'au sein de ce réacteur de réactivation règne un brassage mécanique suffisamment intense pour disperser efficacement le réactif soufré 7 sur une grande partie, voire la totalité des grains des solides ayant été amenés par le flux 6 à l'intérieur du réacteur de réactivation. A titre d'exemple et de manière préférée, le réacteur de réactivation 102 est intérieurement pourvu d'une double vis équipée de pales, assurant le brassage des solides, ce réacteur de réactivation étant avantageusement conçu pour permettre l'introduction, en plus du flux de solides 6 et du réactif soufré 7, d'un ou de plusieurs flux supplémentaires servant à promouvoir la réactivation. Des exemples détaillés d'un tel réacteur de réactivation sont donnés dans FR 2 911 518 et FR 3 060 417 auxquels le lecteur pourra se reporter. De manière alternative, le réacteur de réactivation 102 peut être un lit fluidisé.

Dans tous les cas, le temps de passage, dans le réacteur de réactivation 102, des solides 6 mis en contact avec le réactif soufré 7, est compris entre 2 et 30 minutes, de préférence 2 et 20 minutes, encore de préférence entre 5 et 15 minutes.

Les solides réactivés, ayant traversé le réacteur de réactivation 102, forment, à la sortie de ce dernier, le flux 9 qui est recyclé en étant introduit dans les fumées à traiter 1, en amont du séparateur gaz-solides 101. Le réactif soufré, contenu dans le flux 9 et couvrant la surface des grains solides de ce flux 9, peut alors capter le mercure contenu dans les fumées 1.

Afin de renforcer la captation du mercure, le réactif soufré 7 est, de manière préférée, un polysulfure alcalin, en particulier un polysulfure de sodium dont la formule est Na₂Sₓ avec x compris entre 4 et 10. Ce polysulfure peut réagir directement avec le mercure en se combinant à ce dernier, mais peut également réagir en mettant en œuvre des intermédiaires, notamment des sulfures et/ou du soufre colloïdal qui est produit par réaction entre le polysulfure et des composés acides. Ainsi, à la surface des grains du flux 9 lorsque ce dernier est introduit dans les fumées 1, le polysulfure et l'acide chlorhydrique contenu dans les fumées peuvent réagir selon la réaction Na₂Sₓ+2HCl→(x-1)S+H₂S+2NaCl. Le soufre colloïdal présente l'avantage d'être très divisé et particulièrement actif.

Le réactif soufré 7 est délivré dans le réacteur de réactivation 102 sous forme d'une solution ou suspension, notamment d'une solution aqueuse ou d'une suspension aqueuse, qui est introduite par pulvérisation à l'intérieur de ce réacteur de réactivation. Quelle que soit la forme du réactif soufré 7 sous laquelle ce dernier est introduit dans le réacteur de réactivation 102, la quantité de ce réactif soufré 7 est par exemple comprise entre 40 et 500 mg/Nm³ de fumées 1, exprimée en produit sec.

Suivant une disposition optionnelle, illustrée en pointillés sur la figure 1, un ou plusieurs autres flux 8, servant à promouvoir la réactivation des solides 6 avant leur réintroduction dans les fumées 1 par le flux 9, peuvent être admis dans le réacteur de réactivation 102. Par exemple et de manière préférée, l'un de ces flux additionnels 8 est de la vapeur d'eau, éventuellement mélangée à de l'air et présentant notamment une température comprise entre 100°C et 200°C : ce flux additionnel de vapeur d'eau contribue au brassage au sein du réacteur de réactivation 102 et induit des effets mécaniques de fissuration et de cassure sur les grains des solides traversant le réacteur de réactivation 102.

En plus du fait que le réactif soufré 7 est très actif grâce à sa dispersion et sa recirculation détaillées plus haut, l'invention apporte de multiples avantages.

Ainsi, dans la mesure où le réactif soufré 7, en particulier sous forme de polysulfure alcalin, est très alcalin, sa dispersion dans les grains solides du flux 9 favorise la captation des polluants acides contenus dans les fumées, par captation de ces polluants acides à la surface des grains.

En outre, le produit de combinaison, HgS, entre le réactif soufré 7 et le mercure capté, est très stable. Aucun relargage du mercure, par rétrogradation de ce dernier, n'est à craindre, même lorsque les fumées 1 présentent des températures élevées, notamment supérieures à 200°C.

De plus, lorsque le réactif soufré 7 est délivré en solution aqueuse ou suspension aqueuse, les grains des solides 6 se retrouvent, dans le réacteur de réactivation 102, humidifiés, ce qui abaisse la température de surface effective lors de l'évaporation. On réalise ainsi un reconditionnement de ces grains, qui s'avère particulièrement bénéfique pour le réactif de captation des polluants acides dont l'efficacité s'en trouve accrue, tout particulièrement vis-à-vis du dioxyde de soufre.

Par ailleurs, également lorsque le réactif soufré 7 est délivré en solution aqueuse ou suspension aqueuse, on notera qu'il n'est pas particulièrement utile que cette solution ou suspension aqueuse soit pulvérisée finement dans le réacteur de réactivation 102, puisque la dispersion du réactif soufré dans les solides se fait à la surface des grains de ce dernier sous l'effet du brassage et des interactions grains-grains. En d'autres termes, plutôt que d'utiliser dans le réacteur de réactivation 102 des buses fournissant une pulvérisation fine, qui ont tendance à se boucher facilement, des buses fournissant une pulvérisation plus grossière, avec une taille de gouttes supérieure à 300 µm par exemple, peuvent être utilisées, ce qui réduit la maintenance.

## Revendications

1. Procédé de démercurisation d'effluents gazeux,
dans lequel des effluents gazeux à traiter (1) sont introduits dans un séparateur gaz-solides (101),
dans lequel un réactif soufré (7) et des solides (6), constitués d'entre 70 et 95% en masse des résidus solides (4) collectés par le séparateur gaz-solides (101), sont introduits dans un réacteur de réactivation (102),
dans lequel le réactif soufré (7) est délivré dans le réacteur de réactivation (102) sous forme d'une solution ou suspension, qui est introduite par pulvérisation à l'intérieur du réacteur de réactivation,
dans lequel, au sein du réacteur de réactivation (102), le réactif soufré est dispersé par brassage dans les solides de manière à recouvrir les grains des solides sous l'effet du brassage et des interactions grains-grains,
dans lequel le temps de passage, dans le réacteur de réactivation (102), des solides (6) mis en contact avec le réactif soufré (7), est compris entre 2 et 30 minutes,
et dans lequel un flux (9) sortant du réacteur de réactivation (102) est recyclé dans les effluents gazeux à traiter (1), en amont du séparateur gaz-solides (101).

2. Procédé suivant la revendication 1, dans lequel le réactif soufré (7) est constitué d'un polysulfure alcalin.

3. Procédé suivant la revendication 2, dans lequel le réactif soufré (7) est constitué d'un polysulfure de sodium, de formule Na₂Sₓ, avec x compris entre 4 et 10.

4. Procédé suivant l'une quelconque des revendications précédentes, dans lequel le réactif soufré (7) est délivré dans le réacteur de réactivation (102) sous forme d'une solution ou suspension aqueuse.

5. Procédé suivant l'une quelconque des revendications précédentes, dans lequel le temps de passage, dans le réacteur de réactivation (102), des solides (6) mis en contact avec le réactif soufré (7), est compris entre 2 et 20 minutes, de préférence entre 5 et 15 minutes.

6. Procédé suivant l'une quelconque des revendications précédentes, dans lequel un réactif de captation de polluants acides (10) est également introduit dans les effluents gazeux à traiter (1), en amont du séparateur gaz-solides (101).

7. Procédé suivant la revendication 6, dans lequel le réactif de captation de polluants acides (10) est constitué de chaux vive, de chaux éteinte, de bicarbonate de sodium et/ou de sesquicarbonate de sodium.

8. Procédé suivant l'une quelconque des revendications précédentes, dans lequel de la vapeur d'eau, éventuellement mélangée à de l'air, est également introduite dans le réacteur de réactivation (102).

9. Procédé suivant l'une quelconque des revendications précédentes, dans lequel les effluents gazeux à traiter (1), dans lesquels le flux (9) sortant du réacteur de réactivation (102) est introduit, présentent une température comprise entre 120 et 280°C.

10. Procédé suivant l'une quelconque des revendications précédentes, dans lequel le séparateur gaz-solides (101) est un filtre à manches.

## Patentansprüche

1. Verfahren zur Beseitigung von Quecksilber aus Abgasen
wobei die zu behandelnden Abgase (1) in einen Gas-Feststoff-Trenner (101) eingeführt werden,
indem ein schwefelhaltiges Reagens (7) und Feststoffe (6), die zwischen 70 und 95 Massenprozent aus festen Rückständen (4) bestehen, die durch den Gas-Feststoff-Trenner (101) gesammelt wurden, in einen Reaktivierungsreaktor (102) eingeführt werden,
indem das schwefelhaltige Reagens (7) in den Reaktivierungsreaktor (102) in Form einer Lösung oder Suspension abgegeben wird, die durch Sprühen in das Innere des Reaktivierungsreaktors eingeführt wird,
wobei, im Inneren des Reaktivierungsreaktors (102) das schwefelhaltige Reagens durch Mischen in die Feststoffe dispergiert wird, um die Körner der Feststoffe unter der Einwirkung des Mischens und der Interaktionen zwischen den Körnern zu bedecken,
wobei die Durchlaufzeit im Reaktivierungsreaktor (102) der Feststoffe (6), die mit dem schwefelhaltigen Reagens (7) in Kontakt gebracht werden, im Bereich zwischen 2 und 30 Minuten liegt,
und wobei ein Fluss (9), der aus dem Reaktivierungsreaktor (102) austritt, in den zu behandelnden Abgasen (1) vorgelagert vom Gas-Feststoff-Trenner (101) recycelt wird.

2. Verfahren nach Anspruch 1, wobei das schwefelhaltige Reagens (7) aus einem Alkalipolysulfid besteht.

3. Verfahren nach Anspruch 2, wobei das schwefelhaltige Reagens (7) aus einem Natriumpolysulfid mit der Formel Na₂Sₓ besteht, wobei x im Bereich zwischen 4 und 10 liegt.

4. Verfahren nach einem der vorhergehenden Ansprüche, wobei das schwefelhaltige Reagens (7) in den Reaktivierungsreaktor (102) in Form einer Lösung oder Suspension abgegeben wird.

5. Verfahren nach einem der vorhergehenden Ansprüche, wobei die Durchlaufzeit im Reaktivierungsreaktor (102) der Feststoffe (6), die mit dem schwefelhaltigen Reagens (7) in Kontakt gebracht werden, im Bereich zwischen 2 und 20 Minuten liegt, vorzugsweise zwischen 2 und 15 Minuten.

6. Verfahren nach einem der vorhergehenden Ansprüche, wobei ein ein Reagens zur Aufnahme von sauren Schadstoffen (10) ebenfalls in die zu behandelnden Abgase (1) vorgelagert vom Gas-Feststoff-Trenner (101) eingeführt wird.

7. Verfahren nach Anspruch 6, wobei ein Reagens zur Aufnahme von sauren Schadstoffen (10) aus Branntkalk, gelöschtem Kalk, Natriumbicarbonat und/oder Natriumsesquicarbonat besteht.

8. Verfahren nach einem der vorhergehenden Ansprüche, wobei Wasserdampf, eventuell gemischt mit Luft, ebenfalls in den Reaktivierungsreaktor (102) eingeführt wird.

9. Verfahren nach einem der vorhergehenden Ansprüche, wobei die zu behandelnden Abgase (1), in die der Fluss (9), der aus dem Reaktivierungsreaktor (102) austritt, eingeführt wird, eine Temperatur aufweisen, die im Bereich zwischen 120 und 280ºC liegt.

10. Verfahren nach einem der vorhergehenden Ansprüche, wobei der Gas-Feststoff-Trenner (101) ein Gewebefilter ist.

## Claims

1. Method for removing mercury from gaseous effluents,
wherein gaseous effluents to be treated (1) are fed into a gas-solid separator (101), wherein a sulfur-containing reagent (7) and solids (6), composed of between 70 and 95 weight % of solid residues (4) collected by the gas-solid separator (101), are fed into a reactivation reactor (102),
wherein the sulfur-containing reagent (7) is delivered into the reactivation reactor (102) in the form of a solution or suspension which is added by spraying into the reactivation reactor,
wherein, inside the reactivation reactor (102), the sulfur-containing reagent is dispersed by mixing with the solids so as to coat the particles of the solids under the effect of mixing and particle-particle interactions,
wherein the passage time through the reactivation reactor (102) of the solids (6) contacted with the sulfur-containing reagent (7) is between 2 and 30 minutes,
and wherein an outflow (9) from the reactivation reactor (102) is recycled in the gaseous effluents to be treated (1) upstream of the gas-solid separator (101).

2. The method according to claim 1, wherein the sulfur-containing reagent (7) is composed of an alkaline polysulfide.

3. The method according to claim 2, wherein the sulfur-containing reagent (7) is composed of a sodium polysulfide of formula Na₂Sₓ where x is between 4 and 10.

4. The method according to any of the preceding claims, wherein the sulfur-containing reagent (7) is delivered into the reactivation reactor (102) in the form of an aqueous solution or suspension.

5. The method according to any of the preceding claims, wherein the passage time through the reactivation reactor (102) of the solids (6) contacted with the sulfur-containing reagent (7) is between 2 and 20 minutes, preferably between 5 and 15 minutes.

6. The method according to any of the preceding claims, wherein an acid pollutant capture reagent (10) is also added to the gaseous effluents to be treated (1) upstream of the gas-solid separator (101).

7. The method according to claim 6, wherein the acid pollutant capture reagent (10) is composed of quicklime, slaked lime, sodium bicarbonate and/or sodium sesquicarbonate.

8. The method according to any of the preceding claims, wherein water vapour, optionally mixed with air, is also fed into the reactivation reactor (102).

9. The method according to any of the preceding claims, wherein the gaseous effluents to be treated (1), to which the outflow (9) from the reactivation reactor (102) is added, have a temperature of between 120 and 280 °C.

10. The method according to any of the preceding claims, wherein the gas-solid separator (101) is a baghouse filter.
